# EUROPÄISCHE PATENTSCHRIFT

(11) **EP 3 565 695 B1**
(45) Veröffentlichungstag und Bekanntmachung des Hinweises auf die Patenterteilung: **10.09.2025**
(21) Anmeldenummer: 17821641.2
(22) Anmeldetag: 21.12.2017
(51) Int. Cl.: B29B 13/06, B29B 17/02, B29C 49/00, B29C 49/04, B29B 9/12, C08J 11/26, B29B 9/16, C08J 11/24, C08G 63/183, B29B 13/02, B29B 17/00, B29B 13/00, B29B 9/06, B29K 67/00

(54) **VERWENDUNG EINES GRANULIERTEN PET-REZYKLATS ZUM HERSTELLEN EINES PET-REGRANULATS UND VERFAHREN ZU DESSEN HERSTELLUNG**
USE OF A GRANULATED PET-RECYCLATE FOR PRODUCING A PET-REGRANULE AND METHOD FOR THE PRODUCTION THEREOF
UTILISATION D'UN RECYCLAT DE PET GRANULÉ POUR PRODUIRE UN REGRANULÉ DE PET ET SON PROCÉDÉ DE FABRICATION

(30) Priorität: 03.01.2017 CH 22017
(43) Veröffentlichungstag der Anmeldung: 13.11.2019
(73) Patentinhaber: ALPLA Werke Alwin Lehner GmbH & Co. KG, 6971 Hard (AT)
(72) Erfinder: WEBER, DI DR. MONT., Andreas, 6712 Thüringen (AT); LÄSSER, Franz Michael, 6911 Lochau (AT); SCHRANZ, Michael, 6830 Rankweil (AT)
(74) Vertreter: Swisspat Riederer Hasler Patentanwälte AG
(86) Internationale Anmeldenummer: PCT/EP2017/084200
(87) Internationale Veröffentlichungsnummer: WO 2018/127431

(56) Entgegenhaltungen:
- EP-A1- 0 422 282
- EP-A1- 0 560 033
- EP-A1- 1 829 914
- EP-A2- 0 856 537
- WO-A1-01/21373
- WO-A1-98/40194
- WO-A1-98/44029
- WO-A2-2014/162238
- US-A- 3 767 601
- US-A1- 2002 141 282
- ANONYMOUS: "rPET for direct contact with foodstuffs, reliably produced using the OHL process", 16 October 2012 (2012-10-16), XP002768738, Retrieved from the Internet <URL:http://www.konsens.de/protec.html?&no_cache=1&L=1&no_cache=1&tx_ttnews[pointer]=4&cHash=b4224b785ff40d61c76f73d6815fefa8> [retrieved on 20170329]
- ANONYMOUS: "Efficient process technology for individual product finishing", 31 March 2013 (2013-03-31), Bensheim, XP055360208, Retrieved from the Internet <URL:http://www.konsens.de/fileadmin/Kunden/Protec_Polymer_Processing/Protec_2013-0068_text_English.doc> [retrieved on 20170329]
- AWAJA ET ALL: "Recycling of PET", EUROPEAN POLYMER JOURNAL, vol. 41, 5 February 2005 (2005-02-05), pages 1453 - 1477, XP002768739, DOI: 10.1016/j.eurpolymj.2005.02.005

## Beschreibung

### Gebiet der Erfindung

Die Erfindung betrifft die Verwendung eines granulierten PET-Rezyklats zum Herstellen eines PET-Regranulats gemäss Oberbegriff von Anspruch 1, die Verwendung eines granulierten PET-Rezyklats zum Herstellen eines Behältnisses gemäss Oberbegriff von Anspruch 7 und ein Verfahren zur Herstellung eines PET-Regranulats.

### Stand der Technik

Die Herstellung von Kunststoffbehältnissen, insbesondere Kunststoffflaschen, beispielsweise aus Polyethylen oder Polypropylen, erfolgt in der Regel im Extrusionsblasverfahren. Dabei wird von einem Schlauchkopf ein Kunststoffschlauch extrudiert, der in ein Blasformwerkzeug mit einer Kavität eingebracht, über einen Blasdorn durch Überdruck aufgeblasen und hierdurch an die Innenseite der Kavität gedrückt und durch Kühlung ausgehärtet wird. Durch das Aushärten an der Innenseite der Kavität nimmt der blasgeformte Gegenstand an seiner Aussenseite die Kontur der Innenseite der Kavität an. Nach dem Aushärten wird der blasgeformte Gegenstand dem Blaswerkzeug entnommen. Die dafür eingesetzten Extrusionsblasmaschinen besitzen in der Regel wenigstens einen Extruder zum Zuführen und Aufschmelzen des Kunststoffmaterials. Der Ausgang des Extruders ist mit dem Schlauchkopf verbunden, an dessen vorzugsweise in der Öffnungsweite regulierbarer Austrittsdüse der extrudierte Schlauch austritt. Beim Schlie-ßen des Blaswerkzeugs zum Quetschen des zwischen seine Werkzeughälften eingeführten Kunststoffschlauchs stehen Teile des Kunststoffschlauches an der Oberseite und der Unterseite über, sogenannte Butzen, die in einem separaten Arbeitsschritt abgetrennt werden und dem Recyclingstrom zugeführt werden können. Der Kunststoffschlauch kann ein- oder mehrschichtig sein, er kann als Kunststoffschlauch mit Sichtstreifen, Dekorstreifen oder bezogen auf den Umfang mit mehreren, beispielsweise verschiedenfarbigen, Segmenten extrudiert sein.

Die Blasstation mit dem Blasdorn ist üblicherweise seitlich des Schlauchkopfes angeordnet, wobei das mit dem extrudierten Kunststoffschlauch beschickte Blasformwerkzeug in die Blasstation bewegt werden muss, wo dann der Blasdorn üblicherweise von oben in die Blasformkavität eingefahren wird.

Zumeist wird der Kunststoffschlauch vertikal extrudiert. Durch die Schwerkraft wird der an der Blasdüse austretende Kunststoffschlauch nach unten gezogen. Ist das Material des Kunststoffschlauches jedoch zu dünnflüssig, also keine ausreichende Schmelzefestigkeit besitzt, wird durch das Eigengewicht des Kunststoffschlauches dieser derart in seiner Länge verändert, dass der nachfolgende Blasprozess nicht mehr möglich ist.

Für die Herstellung von PET-Behältern auf Extrusionsblasmaschinen kann das Extrusionsblasformen nur dann eingesetzt werden, wenn die PET-Formmasse die nötige Schmelzefestigkeit besitzt, also der Kunststoffschlauch beim Schließen der Blaswerkzeughälften eine Form und Konsistenz aufweist, die beim nachgelagerten Aufblasen und Aushärten zu einem Hohlkörper führen, der die vorgegebenen Spezifikationen erfüllt. Die Schmelzefestigkeit des PET-Materials, welches für das Streckblasverfahren verwendet wird, bei dem die Behälter aus einem in einem Spritzgießverfahren hergestellten Vorformling, einem sogenannten Preform, gebildet werden, erfüllt nicht die Anforderungen für das Extrusionsblasformen, da dessen intrinsische Viskosität zu gering ist und bei Verwendung im Extrusionsblasen zu besagten unzulässigen Längen des Kunststoffschlauchs führt. Für das Extrusionsblasen muss das PET-Material entsprechend modifiziert sein.

Nach dem Stand der Technik werden für das Extrusionsblasen PET Formmassen eingesetzt, die unter Kurzbezeichnungen wie PET X (extrudable), PET G (glycol modified) und PET B (branched) bekannt sind. In den USA sind auch Begriffe wie EPET, PETE oder auch EBM PET gebräuchlich. Hier handelt es sich um speziell für das Extrusionsblasformen entwickelte PET Materialien, deren produzierte Menge gering ist und somit einen dementsprechend hohen Preis besitzen. Die mit diesen PET Formmassen im EBM-Verfahren produzierten PET-Hohlkörper können jedoch teilweise dem PET Recyclingstrom nicht zugeführt werden, da sie sich beim Recyclen nicht wie Standard PET verarbeiten lassen.

Unter Standard PET Typen versteht man lineare PET Typen (keine verzweigten) mit einem geringen Copolymer-Anteil von weniger als 5 Gew.% und einer intrinsischen Viskosität (IV) zwischen 0,74 und 0,86 dl/g (nach ASTM D 4603).

Patentdokument EP 1 829 914 A1 beschreibt ein Verfahren zum Recyceln eines PET-Materials.

In der US 2013/0029068 A1 wird eine PET-Formmasse vorgeschlagen, welche sich für das EBM-Verfahren eignet und sich im PET-Recyclingstrom unproblematisch verhalten soll. Die PET-Formmasse wird aus PET Neuware, d.h. sogenanntem «virgin PET» oder kurz v-PET hergestellt. PET Neuware ist definitionsgemäß nach seiner Herstellung aus fossilen Rohstoffen oder nachwachsenden Rohstoffen nicht extrudiert worden.

Wegen der zu geringen Schmelzefestigkeit eignet sich Nachgebrauchs-PET, sog. r-PET, nicht für den Einsatz in einer EBM-Maschine. Der Grund für die zu geringe Schmelzestabilität von r-PET dürfte darin liegen, dass die Kunststoffmasse beim Extrudieren durch die nochmalige Hitzeeinwirkung und Einwirkung der Scherkräfte nochmals abgebaut und damit die Molmasse nochmals reduziert wird.

Standard PET (Polyethylenterephtalat) ist aufgrund seiner geringen Schmelzefestigkeit für das Extrusionsblasformen nicht geeignet. Deshalb wurden modifizierte PET-Formmassen entwickelt, die eine verbesserte Schmelzefestigkeit besitzen. Die verbesserte Schmelzefestigkeit kann unter anderem durch eine Verlängerung oder Vernetzung der Molekülketten bewirkt werden, indem man dem PET Kettenverlängerungs- oder Vernetzungsadditive zusetzt. Allerdings sind derartige PET Formmassen dem PET Recyclingstrom aus den aus einem Preform hergestellten Behältern nicht zuführbar, da die Verlängerungs- und Vernetzungsadditive als Kontamination des PET Recyclingstroms angesehen werden.

Nachgebrauchs-PET, sog. PET-Rezyklat (r-PET), wie es am Markt erhältlich ist, besitzt eine intrinsische Viskosität von höchstens 0,88 dl/g nach ASTM D 4603 und ist für den Einsatz im Extrusionsblasverfahren ungeeignet.

### Aufgabe der Erfindung

Aus den Nachteilen des beschriebenen Stands der Technik resultiert die die vorliegende Erfindung initiierende Aufgabe eine PET-Formmasse vorzuschlagen, die zumindest einen bestimmten Anteil PET-Rezyklat beinhaltet und für das Extrusionsblasformen geeignet ist.

### Beschreibung der Erfindung

Es ist die Verwendung eines granulierten PET-Rezyklats zum Herstellen eines PET-Regranulat vorgeschlagen, wobei das granulierte PET-Rezyklat erhältlich ist durch Zerkleinern von post-consumer PET-Flaschen und/oder Industrieabfällen aus der PET-Flaschenproduktion zu Flakes, und anschließendem Aufschmelzen der Flakes durch Extrudieren mittels eines Extruders bei gleichzeitigem Abbau der Intrinsischen Viskosität und Erhöhung der reaktiven Carboxyl- und Hydroxyl-Endgruppen, wobei das PET-Rezyklat mittels einer Festphasenpolykondensation bei einer Temperatur zwischen 185 °C und 230 °C und ohne Zufügen von Kettenverlängerungs- und/oder Vernetzungsadditiven aufkondensiert wird, sodass das PET-Regranulat eine nach ASTM D 4603 gemessene intrinsische Viskosität (IV) von wenigstens 0.95 dl/g, vorzugsweise grösser als 1.0 dl/g und besonders bevorzugt zwischen 1.1 dl/g und 1.7 dl/g aufweist und zur Herstellung von extrusionsgeblasgeformten Behältern geeignet ist.

Erfindungsgemäss wird PET-Rezyklat verwendet wird, das zwischen 30 mmol/kg und 60 mmol/kg Carboxyl-Endgruppen und zwischen 30 mmol/kg und 70 mmol/kg Hydroxyl-Endgruppen aufweist und vor der Modifikation des PET-Rezyklats zum PET-Regranulat ein Wassergehalt des PET-Rezyklats zwischen 100 ppm und 5000 ppm eingestellt wird.

Hierbei ist unter dem Begriff granuliertes PET-Rezyklat das Material zu verstehen, wie es zur Verarbeitung für den Bereich der aus gespritzten Preforms streckgeblasenen Flaschen zur Verfügung gestellt wird. Das PET-Rezyklat wird aus den dem PET-Recyclingstrom zugeführten post-consumer PET-Flaschen und/oder Industrieabfälle aus der PET-Flaschenproduktion gewonnen. Hierzu werden die post-consumer PET-Flaschen und/oder Industrieabfälle aus der PET-Flaschenproduktion bei Bedarf zuerst gewaschen und anschließend zu Flakes zerkleinert. Bei Bedarf werden die Flakes nochmalig gewaschen. Anschließend werden die Flakes durch Extrudieren mittels eines Extruders aufgeschmolzen, die Schmelze durch eine Lochblende zu einem Schmelzestrang gepresst und der Schmelzestrang in einem Wasserbad abgekühlt. Abschließend wird der abgekühlte Schmelzestrang zu PET-Rezyklat granuliert. Unter PET-Regranulat ist zu verstehen, dass das PET-Rezyklat derart modifiziert ist, dass bei dem PET-Regranulat eine intrinsische Viskosität erreicht ist, die es ermöglicht, aus dem PET-Regranulat einen Behälter im Extrusionsblasverfahren herzustellen. Das PET-Regranulat wird vollumfänglich aus PET-Rezyklat hergestellt, ohne dass Kettenverlängerungs- und/oder Vernetzungsadditive zugefügt werden müssten. Entsprechend können aus PET-Regranulat im Extrusionsblasverfahren hergestellte Behälter dem PET-Recyclingstrom aus PET-Flaschen zugeführt werden. Dadurch, dass das PET-Regranulat aus post-consumer PET-Behältern gefertigt wurde, ist das PET-Regranulat mindestens zweimalig extrudiert worden, also zweimalig aufgeschmolzen und damit zweimalig Scherkräften und zweimalig einer Wärmeeinwirkung ausgesetzt gewesen. Erfahrungsgemäß besitzen aus PET-Regranulat gefertigte Behälter einen Gelbstich, der bei Bedarf durch Zumischen von v-PET aufgehellt werden kann. Hier kann v-PET bis maximal 40 Gew.-% zugemischt werden. In der Regel kann zwischen 10 Gew.-% und 30 Gew.-% v-PET zugemischt werden, wobei sich die Prozentangabe auf die Gesamtmenge aus PET-Regranulat und v-PET bezieht. Auch kann der Gelbstich durch Zumischen von Farbe, vorzugsweise einer blauen oder grünen Farbe überdeckt werden. Das PET-Regranulat ermöglicht somit die Herstellung von transparenten Behältern im EBM-Verfahren.

Gemäß einer weiteren Ausführungsform der Erfindung weist das PET-Rezyklat eine nach ASTM D 4603 gemessene intrinsische Viskosität von weniger als 0,8 dl/g auf. Zumeist besitzt das PET-Rezyklat eine nach ASTM D 4603 gemessene intrinsische Viskosität von weniger als 0,74 dl/g und vorzugsweise zwischen 0,74 dl/g und 0,73 dl/g. Es hat sich gezeigt, dass gerade PET-Rezyklat mit einer derart geringen intrinsische Viskosität geeignet ist, sich mit vertretbarem wirtschaftlichen Aufwand zu PET-Regranulat modifizieren zu lassen.

Gemäß einer weiteren Ausführungsform der Erfindung weist das PET-Rezyklat, aus dem das PET-Regranulat hergestellt ist, Carboxyl-Endgruppen zwischen 32 mmol/kg und 40 mmol/kg, und Hydroxyl-Endgruppen zwischen 50 mmol/kg und 60 mmol/kg, auf. Es hat sich gezeigt, dass insbesondere das Extrudieren und Aufschmelzen der PET-Flakes für die Herstellung des PET-Rezyklats wichtig ist. Durch die nochmalige Einwirkung von Wärme und Scherkräften auf die PET-Flakes, die aus post-consumer PET-Flaschen und/ oder Industrieabfällen aus der PET-Flaschenproduktion gefertigt werden, auf die in einem vorgelagerten Herstellprozess bereits Wärme und Scherkräfte durch das Extrudieren eingewirkt haben, und der damit verbundenen Reduzierung der intrinsischen Viskosität, respektive des Molekulargewichts, wird eine hohe Anzahl an reaktiven Endgruppen erzeugt. Durch Entzug von Wasser durch Vakuum und Erhitzen oder auch durch Erhitzen und Spülen bei atmosphärischem Druck mit Stickstoff verbinden sich die Carboxyl-Endgruppen mit den Hydroxyl-Endgruppen. Gerade PET-Rezyklat mit Carboxyl-Endgruppen zwischen 32 mmol/kg und 40 mmol/kg und Hydroxyl-Endgruppen zwischen 50 mmol/kg und 60 mmol/kg neigen zu einem schnellen Verbinden und damit zu einer Kettenverlängerung, die zu einer Erhöhung der intrinsischen Viskosität führt. Dies dürfte auch der Grund dafür sein, dass die Fachwelt den Einsatz von PET-Rezyklat im EBM-Prozess bisher nicht in Betracht gezogen hat.

Gemäß einer weiteren Ausführungsform der Erfindung erfolgt die Modifikation durch Aufkondensieren. Statt Aufkondensieren werden auch die Begriffe Aufpolymerisation oder Aufesterung verwendet. Gerade dieser Prozess kann beispielsweise in einem Festphasenpolykondensations-Reaktor (= solid state polycondensation = SSP) erfolgen. Anstelle eines SSP-Reaktors kann für die Aufkondensierung auch ein Trockner eingesetzt werden. Der SSP-Prozess kann entweder separat in einem Recycling Werk oder im Werk stattfinden, wo der EBM-Herstellungsprozess durchgeführt wird. Es hat sich gezeigt, dass PET-Rezyklat reaktiver ist als v-PET und sich entsprechend leichter aufkondensieren lässt als v-PET. Dies ist ein grosser Vorteil, denn dadurch verringern sich die Herstellzeiten.

Gemäß einer weiteren Ausführungsform der Erfindung ist das PET-Regranulat als Kugelgranulat ausgebildet. Gerade die Ausformung als Kugelgranulat, die bereits das PET-Rezyklat besitzt, kann gewährleisten, dass die Aufkondensation des PET-Rezyklats gleichmäßig erfolgt. Damit ist eine homogene Verteilung der intrinsischen Viskosität über das PET-Regranulat gewährleistet. Typischerweise bewegt sich die Bandbreite der intrinsischen Viskosität des PET-Regranulats in der Form, wie es der Kunde zur Verarbeitung erhält, in einem Bereich von 0,03 dl/g. Da PET-Rezyklat und PET-Regranulat Schüttgüter sind, wird ein Abrieb oder ein Abstoßen durch die Kugelform weitgehend verhindert. Im Gegensatz hierzu kommt es bei Schütten von zylinderförmig ausgebildeten PET-Rezyklat in der Regel zu einem Abstoßen von Kanten. Diese Bruchstücke werden schneller aufkondensiert. Auch kann die Bandbreite der intrinsischen Viskosität innerhalb eines Granulatkorns bei zylindrischer Ausbildung größer sein, da innerhalb dieser geometrischen Ausgestaltung plane Flächen und gekrümmte Flächen aufeinanderstoßen, die ein voneinander unterschiedliches Aufkondensierungsverhalten aufweisen. Dies kann in Konsequenz beim Kunden, der auch Abrieb und Bruchstücke in der Lieferung vorfindet, bei einem zylinderförmig ausgebildeten Regranulat zu einer breiteren Bandbreite der intrinsischen Viskosität führen als bei der kugelförmig ausgebildeten Variante.

Gemäß einer weiteren Ausführungsform der Erfindung ist das PET-Regranulat durch eine Festphasenpolykondensation bei einer Temperatur zwischen 185 °C und 230 °C, vorzugsweise zwischen 195 °C und 220 °C und besonders bevorzugt zwischen 200 °C und 210 °C modifiziert. Unter den vorgenannten Bedingungen kann das PET-Rezyklat rasch und kostengünstig zu dem PET-Regranulat aufkondensiert werden.

Gemäß einem weiteren Aspekt der Erfindung ist die Verwendung eines granulierten PET-Rezyklats zum Herstellen eines Behältnisses, insbesondere einer Flasche, gemäss Oberbegriff von Anspruch 7 vorgeschlagen, wobei PET-Rezyklat verwendet wird, das zwischen 30 mmol/kg und 60 mmol/kg Carboxyl-Endgruppen und zwischen 30 mmol/kg und 70 mmol/kg Hydroxyl-Endgruppen aufweist und vor der Modifikation des PET-Rezyklats zum PET-Regranulat ein Wassergehalt des PET-Rezyklats zwischen 100 ppm und 5000 ppm eingestellt wird. Extrusionsgeblasene Behälter aus dem erfindungsgemässen PET-Regranulat können mit der Nummer 01 des «SPI resin identification codes system» gekennzeichnet werden und damit dem normalen PET-Recyclingstrom zugeführt werden.

Gemäß einer weiteren Ausführungsform der Erfindung ist das PET-Regranulat lebensmittelecht. Damit können aus dem PET-Regranulat extrusionsgeblasene Behälter zur Aufbewahrung von Lebensmitteln hergestellt werden.

Gemäß einer weiteren Ausführungsform der Erfindung ist das Behältnis nach Gebrauch zu PET-Rezyklat verarbeitbar. Durch die Zuführbarkeit des aus dem PET-Regranulat extrusionsgeblasenen Behälters in den normalen PET-Recyclingstrom kann dieses Behältnis wieder zu PET-Rezyklat verarbeitet werden, das zu PET-Regranulat aufkondensierbar ist.

Gemäß einer weiteren Ausführungsform der Erfindung ist ein Verfahren zur Herstellung eines PET-Regranulats vorgeschlagen, das sich zum Herstellen von extrusionsblasgeformten Behältern eignet und erhältlich ist durch Aufkondensieren eines granulierten PET-Rezyklats, das durch Zerkleinern von post-consumer PET-Flaschen und/oder Industrieabfällen aus der PET-Flaschenproduktion zu Flakes, und anschließendem Aufschmelzen der Flakes durch Extrudieren mittels eines Extruders bei gleichzeitigem Abbau der Intrinsischen Viskosität und Erhöhung der reaktiven Carboxyl- und Hydroxyl-Endgruppen, wobei PET-Rezyklat verwendet wird, das zwischen 30 mmol/kg und 60 mmol/kg Carboxyl-Endgruppen und zwischen 30 mmol/kg und 70 mmol/kg Hydroxyl-Endgruppen aufweist und vor der Modifikation des PET-Rezyklats zum PET-Regranulat ein Wassergehalt des PET-Rezyklats zwischen 100 ppm und 5000 ppm eingestellt wird und das PET-Rezyklat mittels einer Festphasenpolykondensation bei einer Temperatur zwischen 185 oC und 230 oC und ohne Zufügen von Kettenverlängerungs- und/oder Vernetzungsadditiven aufkondensiert wird, sodass das PET-Regranulat eine nach ASTM D 4603 gemessene intrinsische Viskosität von mehr als 0.95 dl/g, vorzugsweise größer als 1.0 dl/g und besonders bevorzugt eine Viskosität zwischen 1.1 dl/g und 1.7 dl/g aufweist.

Weitere Schritte des Verfahrens sind das Pressen der Schmelze durch eine Lochblende zu einem Schmelzestrang, anschließendes Abkühlen des Schmelzestrangs, und Granulieren des abgekühlten Schmelzestrangs zu PET-Rezyklat.

Grundsätzlich kann v-PET dem PET-Rezyklat vor der Aufkondensierung des PET-Rezyklat zu PET-Regranulat beigemischt werden. Dies kann direkt im Werk erfolgen, wo das PET-Rezyklat aufgearbeitet wird. Die Modifikation wird bevorzugt durch eine Erhöhung der mittleren Molekülmasse bewirkt. Dies geschieht vorzugsweise, indem das PET-Rezyklat/v-PET - Gemisch einer Festphasen-Polykondensation unterzogen wird. Die Festphasen-Polykondensation ist auch unter dem englischen Begriff "Solid State Polycondensation" (SSP) bekannt. Sie erfolgt in einem entsprechenden Festphasen-Reaktor, der vorzugsweise mit einem Rührwerk ausgestattet ist. In diesem wird das granulierte PET-Rezyklat schonend durchmischt und gleichzeitig erhitzt. Dabei werden Wasser und leichtflüchtige Komponenten aus dem aufgegebenen PET-Rezyklat ausgetrieben und es kommt zu Kondensationsreaktionen und damit einer Erhöhung des mittleren Molekulargewichts. Die Innentemperatur des Reaktors liegt bevorzugt bei 200 bis 220 C. Zur Absaugung des Brüden herrscht in dem Reaktor vorzugsweise ein Unterdruck von weniger als 50 mbar und besonders bevorzugt ein solcher von weniger als 10 mbar. Die Verweilzeit des PET-Rezyklats in dem Reaktor liegt vorzugsweise bei 6 bis 40 Stunden, besonders bevorzugt bei 10h bis 35h, und ganz besonders bevorzugt bei 15h bis 30h, in Abhängigkeit von der zu erreichenden intrinsischen Viskosität.

Vorteilhaft erfolgt die Modifikation des PET-Rezyklats zu dem PET-Regranulat in einem Festphasenpolykondensations -Reaktor bei einer erhöhten Temperatur zwischen zwischen 195 °C und 220 °C und besonders bevorzugt zwischen 200 °C und 210 °C.

Gemäß einer weiteren Ausführungsform der Erfindung wird das PET-Rezyklat während 6h bis 40h, vorzugsweise während 10h bis 35h, und besonders bevorzugt während 15h bis 30h der erhöhten Temperatur ausgesetzt. Unter diesen Bedingungen werden dem PET-Rezyklat Wasser und andere leichtflüchtige Stoffe entzogen, und es erfolgt eine rasche Kettenverlängerung. Die Kettenverlängerung äussert sich in einer erhöhten intrinsischen Viskosität. Die thermische Behandlung des PET-Rezyklats erfolgt solange, bis die gewünschte, im Vergleich zum Ausgangsmaterial erhöhte intrinsische Viskosität des PET-Regranulats erreicht ist. Besonders bevorzugt wird beim PET-Regranulat eine nach ASTM D 4603 gemessene intrinsische Viskosität zwischen 1.0 dl/g und 1.7 dl/g eingestellt.

Gemäß einer weiteren Ausführungsform der Erfindung wird das das PET-Rezyklat im Festphasenkondesations-Reaktor einem Unterdruck von weniger als 50 mbar und vorzugsweise weniger als 10 mbar ausgesetzt.

Für den Fall, dass die Reaktivität des PET-Rezyklats nicht ausreichend sein sollte, können diesem auch reaktive Additive, z.B. Ethylenglykol und/oder Terephthalsäure und/oder Isopththalsäure und/oder deren Ester (z.B. Terephthalsäuredimethylester), zugesetzt werden. Es können z.B. Moleküle, die als Kettenverlängerer (extender) wirken, zugemischt werden, oder solche, die imstande sind, zwei Moleküle miteinander zu verbinden (branching). Weil Additive jedoch teuer sind und durch deren Einsatz die Wiederverwertbarkeit des Kunststoffs gefährdet ist, wird auf den Einsatz von Additiven jedoch zweckmässigerweise verzichtet.

Vorteilhaft wird die mittlere Molekülmasse und/ oder die intrinsische Viskosität des eingesetzten PET-Rezyklats durch die Modifikation zu PET-Regranulat um wenigstens 20%, vorzugsweise um wenigstens 25% erhöht.

Vorteilhaft wird für die Herstellung von Behältern mit einem Volumen zwischen 100 ml und 300 ml das PET-Rezyklat derart modifiziert, dass die nach ASTM D 4603 gemessene intrinsische Viskosität des PET-Regranulats zwischen 0.95 dl/g und 1.3 und vorzugsweise zwischen 1.0 dl/g und 1.2 dl/g liegt. Für die Herstellung von Behältern mit einem Volumen zwischen 250 ml und 1000 ml wird das PET-Rezyklat derart modifiziert, dass die nach ASTM D 4603 gemessene intrinsische Viskosität des PET-Regranulats zwischen 1.1 dl/g und 1.5 dl/g und vorzugsweise zwischen 1.2 dl/g und 1.4 dl/g liegt.

Für die Herstellung von Behältern mit einem Volumen zwischen 750 ml und 5000 ml wird das r-PET vorzugsweise derart modifiziert, dass die nach ASTM D 4603 gemessene intrinsische Viskosität des PET-Regranulats zwischen 1.2 dl/g und 1.6 dl/g und vorzugsweise zwischen 1.3 dl/g und 1.6 dl/g liegt.

Zweckmässigerweise wird das PET-Rezyklat vor der Modifikation aufgeschmolzen und granuliert, wobei der Wassergehalt des PET-Rezyklats zwischen 100 ppm und 5000 ppm und vorzugsweise zwischen 300 ppm und 3000 ppm eingestellt wird. Durch die Einstellung eines bestimmten Wassergehalts beim Granuliervorgang können die Abbaureaktionen des PET gezielt beeinflusst werden, da die Geschwindigkeit der Abbaureaktionen mit höherem Wassergehalt rasch zunimmt. Entsprechend kann die Reaktivität des PET-Rezyklats und dessen Neigung zu Kettenaufbaureaktionen in einem anschliessenden SSP-Prozess ganz wesentlich beeinflusst werden.

Einem Fachmann ist klar, dass Merkmale von Vorrichtungen, wo sinnvoll, auch Merkmale von Verfahren sein können und umgekehrt.

Die Erfindung ist im beigefügten Anspruchssatz beschrieben.

## Patentansprüche

1. Verwendung eines granulierten PET-Rezyklats zum Herstellen eines PET-Regranulats, das sich zum Herstellen von extrusionsblasgeformten Behältern, insbesondere von PET-Kunststoffflaschen, eignet, wobei das granulierte PET-Rezyklat hergestellt wird durch Zerkleinern von post-consumer PET-Flaschen und/oder Industrieabfällen aus der PET-Flaschenproduktion zu Flakes, anschließendem Aufschmelzen der Flakes durch Extrudieren mittels eines Extruders bei gleichzeitigem Abbau der Intrinsischen Viskosität und Erhöhung der reaktiven Carboxyl- und Hydroxyl-Endgruppen, Pressen der Schmelze durch eine Lochblende zu einem Schmelzstrang, Abkühlen des Schmelzstrangs, und Granulieren des abgekühlten Schmelzstrangs zu PET-Rezyklat, wobei das PET-Rezyklat mittels einer Festphasenpolykondensation bei einer Temperatur zwischen 185 °C und 230 °C und ohne Zufügen von Kettenverlängerungs- und/oder Vernetzungsadditiven aufkondensiert wird, sodass das PET-Regranulat eine nach ASTM D 4603 gemessene intrinsische Viskosität von größer als 1.0 dl/g und besonders bevorzugt zwischen 1.1 dl/g und 1.7 dl/g aufweist,
**dadurch gekennzeichnet, dass** PET-Rezyklat verwendet wird, das zwischen 30 mmol/kg und 60 mmol/kg Carboxyl-Endgruppen und zwischen 30 mmol/kg und 70 mmol/kg Hydroxyl-Endgruppen aufweist und vor der Modifikation des PET-Rezyklats zum PET-Regranulat ein Wassergehalt des PET-Rezyklats zwischen 100 ppm und 5000 ppm eingestellt wird.

2. Verwendung nach Anspruch 1, **dadurch gekennzeichnet, dass** das granulierte PET-Rezyklat eine nach ASTM D 4603 gemessene intrinsische Viskosität kleiner als 0.8 dl/g aufweist.

3. Verwendung nach Anspruch 1 oder 2, **dadurch gekennzeichnet, dass** das PET-Rezyklat Carboxyl-Endgruppen zwischen 32 mmol/kg und 40 mmol/kg, und Hydroxyl-Endgruppen zwischen 50 mmol/kg und 60 mmol/kg, aufweist.

4. Verwendung nach einem der vorhergehenden Ansprüche, **dadurch gekennzeichnet, dass** das PET-Regranulat als Kugelgranulat ausgebildet ist.

5. Verwendung nach Anspruch 4, **dadurch gekennzeichnet, dass** das Aufkondensieren durch eine Festphasenpolykondensation bei einer Temperatur zwischen 195 °C und 220 °C und besonders bevorzugt zwischen 200 °C und 210 °C erfolgt ist.

6. Verwendung nach einem der vorhergehenden Ansprüche, **dadurch gekennzeichnet, dass** das PET-Regranulat lebensmittelecht ist.

7. Verwendung eines granulierten PET-Rezyklats zum Herstellen eines Behältnis, insbesondere PET-Kunststoffflasche, welches aus einem PET-Regranulat gemäss einem der vorangehenden Ansprüchen in einem Extrusionsblasprozess hergestellt ist, wobei granuliertes PET-Rezyklat hergestellt wird durch Zerkleinern von post-consumer PET-Flaschen und/oder Industrieabfällen aus der PET-Flaschenproduktion zu Flakes, und anschließendem Aufschmelzen der Flakes durch Extrudieren mittels eines Extruders bei gleichzeitigem Abbau der Intrinsischen Viskosität und Erhöhung der reaktiven Carboxyl- und Hydroxyl-Endgruppen, Pressen der Schmelze durch eine Lochblende zu einem Schmelzstrang, Abkühlen des Schmelzstrangs, und Granulieren des abgekühlten Schmelzstrangs zu PET-Rezyklat, wobei das PET-Rezyklat mittels einer Festphasenpolykondensation bei einer Temperatur zwischen 185 °C und 230 °C und ohne Zufügen von Kettenverlängerungs- und/oder Vernetzungsadditiven aufkondensiert wird, sodass das PET-Regranulat eine nach ASTM D 4603 gemessene intrinsische Viskosität von größer als 1.0 dl/g und besonders bevorzugt zwischen 1.1 dl/g und 1.7 dl/g aufweist, weiter **dadurch gekennzeichnet, dass** PET-Rezyklat verwendet wird, das zwischen 30 mmol/kg und 60 mmol/kg Carboxyl-Endgruppen und zwischen 30 mmol/kg und 70 mmol/kg Hydroxyl-Endgruppen aufweist und vor der Modifikation des PET-Rezyklats zum PET-Regranulat ein Wassergehalt des PET-Rezyklats zwischen 100 ppm und 5000 ppm eingestellt wird.

8. Verwendung nach Anspruch 7, **dadurch gekennzeichnet, dass** für die Herstellung von Behältnissen mit einem Volumen zwischen 250 ml und 1000 ml das verwendete PET-Regranulat eine nach ASTM D 4603 gemessene intrinsische Viskosität zwischen 1.2 dl/g und 1.4 dl/g, und für die Herstellung von Behältnissen mit einem Volumen zwischen 750 ml und 5000 ml das PET- Regranulat eine nach ASTM D 4603 gemessene intrinsische Viskosität zwischen 1.2 dl/g und 1.6 dl/g und vorzugsweise zwischen 1.3 dl/g und 1.6 dl/g aufweist.

9. Verwendung nach Anspruch 8, **dadurch gekennzeichnet, dass** das Behältnis nach Gebrauch zu PET-Rezyklat verarbeitbar ist.

10. Verfahren zur Herstellung eines PET-Regranulats, das sich zum Herstellen von extrusionsblasgeformten Behältern eignet und hergestellt wird durch Aufkondensieren eines granulierten PET-Rezyklats, das durch Zerkleinern von post-consumer PET-Flaschen und/oder Industrieabfällen aus der PET-Flaschenproduktion zu Flakes, anschließendem Aufschmelzen der Flakes durch Extrudieren mittels eines Extruders bei gleichzeitigem Abbau der Intrinsischen Viskosität und Erhöhung der reaktiven Carboxyl- und Hydroxyl-Endgruppen, Pressen der Schmelze durch eine Lochblende zu einem Schmelzstrang, Abkühlen des Schmelzstrangs, und Granulieren des abgekühlten Schmelzstrangs zu PET-Rezyklat hergestellt wird, wobei vor der Modifikation des PET-Rezyklats zum PET-Regranulat ein Wassergehalt des PET-Rezyklats zwischen 100 ppm und 5000 ppm eingestellt wird und das PET-Rezyclat mittels einer Festphasenpolykondensation bei einer Temperatur zwischen 185 °C und 230 °C und ohne Zufügen von Kettenverlängerungs- und/oder Vernetzungsadditiven aufkondensiert wird, sodass das PET-Regranulat eine nach ASTM D 4603 gemessene intrinsische Viskosität von größer als 1.0 dl/g und besonders bevorzugt eine Viskosität zwischen 1.1 dl/g und 1.7 dl/g aufweist .

11. Verfahren nach Anspruch 10, **gekennzeichnet durch**
Waschen der Flakes.

12. Verfahren nach einem der Ansprüche 10 oder 11, **dadurch gekennzeichnet, dass** das PET-Rezyklat eine Intrinsische Viskosität von weniger als 0,8 dl/g aufweist.

13. Verfahren nach einem der Ansprüche 10 bis 12, **dadurch gekennzeichnet, dass** das PET-Rezyklat in einem Festphasenpolykondensations -Reaktor bei einer erhöhten Temperatur zwischen 185 °C und 230 °C, vorzugsweise zwischen 195 °C und 220 °C und besonders bevorzugt zwischen 200 °C und 210 °C modifiziert wird.

14. Verfahren nach Anspruch 13, **dadurch gekennzeichnet, dass** das PET-Rezyklat während 6h bis 40h, vorzugsweise während 10h bis 35h, und besonders bevorzugt während 15h bis 30h der erhöhten Temperatur ausgesetzt wird.

15. Verfahren nach Anspruch 13 oder 14, **dadurch gekennzeichnet, dass** das PET-Rezyklat im Festphasenpolykondensations -Reaktor einem Unterdruck von weniger als 50 mbar, vorzugsweise weniger als 10 mbar ausgesetzt wird.

16. Verfahren nach einem der Ansprüche 10 bis 15, **dadurch gekennzeichnet, dass** ein Wassergehalt des PET-Rezyklat vor der Modifikation zu dem PET-Regranulat zwischen 300 ppm und 3000 ppm eingestellt wird.

## Claims

1. Use of a granulated PET recyclate for the production of a PET regranulate which is suitable for the production of extrusion blow-moulded containers, in particular of PET plastic bottles, wherein the granulated PET recyclate is produced by shredding post-consumer PET bottles and/or industrial waste from PET bottle production to form flakes, subsequent melting of the flakes by extrusion by means of an extruder with simultaneous reduction of the intrinsic viscosity and increase in the reactive carboxyl and hydroxyl end groups, pressing of the melt through an apertured plate to form a melt rod, cooling of the melt rod and granulation of the cooled melt rod to form PET recyclate, wherein the PET recyclate is condensed by means of a solid state polycondensation at a temperature between 185°C and 230°C and without the addition of chain extender additives and/or crosslinking additives, so that the PET regranulate has an intrinsic viscosity, measured in accordance with ASTM D 4603, of more than 1.0 dl/g and particularly preferably between 1.1 dl/g and 1.7 dl/g,
**characterized in that** PET recyclate is used which contains between 30 mmol/kg and 60 mmol/kg of carboxyl end groups and between 30 mmol/kg and 70 mmol/kg of hydroxyl end groups, and prior to the modification of the PET recyclate into the PET regranulate, a water content of the PET recyclate is adjusted to between 100 ppm and 5000 ppm.

2. Use as claimed in claim 1, **characterized in that** the granulated PET recyclate has an intrinsic viscosity, measured in accordance with ASTM D 4603, of less than 0.8 dl/g.

3. Use as claimed in claim 1 or claim 2, **characterized in that** the PET recyclate contains between 32 mmol/kg and 40 mmol/kg of carboxyl end groups and between 50 mmol/kg and 60 mmol/kg of hydroxyl end groups.

4. Use as claimed in one of the preceding claims, **characterized in that** the PET regranulate is in the form of spherical granules.

5. Use as claimed in claim 4, **characterized in that** the condensation is carried out by a solid state polycondensation at a temperature between 195°C and 220°C and particularly preferably between 200°C and 210°C.

6. Use as claimed in one of the preceding claims, **characterized in that** the PET regranulate is food-safe.

7. Use of a granulated PET recyclate for the production of a container, in particular a PET plastic bottle, which is produced from a PET regranulate as claimed in one of the preceding claims in an extrusion blow moulding process, wherein granulated PET recyclate is produced by shredding post-consumer PET bottles and/or industrial waste from PET bottle production to form flakes, and subsequent melting of the flakes by extrusion by means of an extruder with simultaneous reduction of the intrinsic viscosity and increase in the reactive carboxyl and hydroxyl end groups, pressing of the melt through an apertured plate to form a melt rod, cooling of the melt rod and granulation of the cooled melt rod to form PET recyclate, wherein the PET recyclate is condensed by means of a solid state polycondensation at a temperature between 185°C and 230°C and without the addition of chain extender additives and/or crosslinking additives, so that the PET regranulate has an intrinsic viscosity, measured in accordance with ASTM D 4603, of more than 1.0 dl/g and particularly preferably between 1.1 dl/g and 1.7 dl/g, further **characterized in that** PET recyclate is used which contains between 30 mmol/kg and 60 mmol/kg of carboxyl end groups and between 30 mmol/kg and 70 mmol/kg of hydroxyl end groups, and prior to the modification of the PET recyclate into the PET regranulate, a water content of the PET recyclate is adjusted to between 100 ppm and 5000 ppm.

8. Use as claimed in claim 7, **characterized in that** for the production of containers with a volume between 250 mL and 1000 mL, the PET regranulate used has an intrinsic viscosity, measured in accordance with ASTM D 4603, between 1.2 dl/g and 1.4 dl/g, and for the production of containers with a volume between 750 mL and 5000 mL, the PET regranulate has an intrinsic viscosity, measured in accordance with ASTM D 4603, between 1.2 dl/g and 1.6 dl/g and preferably between 1.3 dl/g and 1.6 dl/g.

9. Use as claimed in claim 8, **characterized in that** the container can be processed into PET recyclate after use.

10. A method for the production of a PET regranulate which is suitable for the production of extrusion blow-moulded containers and is produced by condensation of a granulated PET recyclate which is produced by shredding post-consumer PET bottles and/or industrial waste from PET bottle production to form flakes, subsequent melting of the flakes by extrusion by means of an extruder with simultaneous reduction of the intrinsic viscosity and increase in the reactive carboxyl and hydroxyl end groups, pressing of the melt through an apertured plate to form a melt rod, cooling of the melt rod and granulation of the cooled melt rod to form PET recyclate, wherein prior to the modification of the PET recyclate into the PET regranulate, a water content of the PET recyclate is adjusted to between 100 ppm and 5000 ppm and the PET recyclate is condensed by means of a solid state polycondensation at a temperature between 185°C and 230°C and without the addition of chain extender additives and/or crosslinking additives, so that the PET regranulate has an intrinsic viscosity, measured in accordance with ASTM D 4603, of more than 1.0 dl/g and particularly preferably a viscosity between 1.1 dl/g and 1.7 dl/g.

11. The method as claimed in claim 10, **characterized by** washing the flakes.

12. The method as claimed in one of claims 10 or 11, **characterized in that** the PET recyclate has an intrinsic viscosity of less than 0.8 dl/g.

13. The method as claimed in one of claims 10 to 12, **characterized in that** the PET recyclate is modified in a solid state polycondensation reactor at an increased temperature between 185°C and 230°C, preferably between 195°C and 220°C, and particularly preferably between 200°C and 210°C.

14. The method as claimed in claim 13, **characterized in that** the PET recyclate is exposed to the increased temperature for 6h to 40h, preferably for 10h to 35h, and particularly preferably for 15h to 30h.

15. The method as claimed in claim 13 or claim 14, **characterized in that** in the solid state polycondensation reactor, the PET recyclate is exposed to a partial vacuum of less than 50 mbar, preferably less than 10 mbar.

16. The method as claimed in one of claims 10 to 15, **characterized in that** prior to the modification to form the PET regranulate, a water content of the PET recyclate is adjusted to between 300 ppm and 3000 ppm.

## Revendications

1. Utilisation de granulés de PET recyclé pour fabriquer des granulés de PET régénérés, ces derniers convenant pour la fabrication de récipients obtenus par extrusion-soufflage, s'agissant notamment de bouteilles en plastique PET, les granulés de PET recyclé étant obtenus par broyage en paillettes de bouteilles en PET usagées et/ou de déchets industriels issus de la fabrication de bouteilles en PET, pour ensuite faire fondre lesdites paillettes par extrusion au moyen d'une extrudeuse en réduisant en même temps la viscosité intrinsèque et en augmentant les groupements terminaux réactifs de type carboxyle et hydroxyle, faire passer sous pression la matière fondue à travers une filière pour obtenir un fil continu en fusion, refroidir le fil continu en fusion, et transformer le fil continu en fusion refroidi en granulés pour obtenir du PET recyclé, ledit PET recyclé subissant une condensation supplémentaire par polycondensation en phase solide à une température comprise entre 185 °C et 230 °C sans ajout d'additifs de prolongation de chaîne et/ou de réticulation, faisant en sorte que les granulés de PET régénérés présentent une viscosité intrinsèque supérieure à 1,0 dl/g et, avec une préférence particulière, comprise entre 1,1 dl/g et 1,7 dl/g, mesurée selon ASTM D 4603
**caractérisée en ce que** l'on utilise un PET recyclé qui présente entre 30 mmol/kg et 60 mmol/kg de groupements terminaux carboxyle et entre 30 mmol/kg et 70 mmol/kg de groupements terminaux hydroxyle et qu'avant la modification du PET recyclé en granulés de PET régénérés, on ajuste la teneur en eau du PET recyclé de manière à ce qu'elle soit comprise entre 100 ppm et 5000 ppm.

2. Utilisation selon la revendication 1, **caractérisée en ce que** les granulés de PET recyclé présentent une viscosité intrinsèque inférieure à 0,8 dl/g, mesurée selon ASTM D 4603.

3. Utilisation selon les revendications 1 ou 2, **caractérisée en ce que** le PET recyclé présente entre 32 mmol/kg et 40 mmol/kg de groupements terminaux carboxyle et entre 50 mmol/kg et 60 mmol/kg de groupements terminaux hydroxyle.

4. Utilisation selon l'une des revendications précédentes, **caractérisée en ce que** les granulés de PET régénérés sont réalisés sous forme de granulés sphériques.

5. Utilisation selon la revendication 4, **caractérisée en ce que** la condensation supplémentaire a été réalisée à une température comprise entre 195 °C et 220 °C et, avec une préférence particulière, entre 200 °C et 210 °C.

6. Utilisation selon l'une des revendications précédentes, **caractérisée en ce que** les granulés de PET régénérés sont aptes au contact alimentaire.

7. Utilisation de granulés de PET recyclé pour fabriquer un récipient, s'agissant notamment d'une bouteille en plastique PET, qui est fabriqué à partir de granulés de PET régénéré selon l'une des revendications précédentes dans un processus d'extrusion-soufflage, consistant à obtenir des granulés de PET recyclé en broyant en paillettes des bouteilles en PET usagées et/ou des déchets industriels issus de la fabrication de bouteilles en PET, pour ensuite faire fondre lesdites paillettes par extrusion au moyen d'une extrudeuse en réduisant en même temps la viscosité intrinsèque et en augmentant les groupements terminaux réactifs de type carboxyle et hydroxyle, faire passer sous pression la matière fondue à travers une filière pour obtenir un fil continu en fusion, refroidir le fil continu en fusion, et transformer le fil continu en fusion refroidi en granulé pour obtenir du PET recyclé, ledit PET recyclé subissant une condensation supplémentaire par polycondensation en phase solide à une température comprise entre 185 °C et 230 °C sans ajout d'additifs de prolongation de chaîne et/ou de réticulation, faisant en sorte que les granulés de PET régénérés présentent une viscosité intrinsèque supérieure à 1,0 dl/g et, avec une préférence particulière, comprise entre 1,1 dl/g et 1,7 dl/g, mesurée selon ASTM D 4603, **caractérisée en outre en ce que** l'on utilise un PET recyclé qui présente entre 30 mmol/kg et 60 mmol/kg de groupements terminaux carboxyle et entre 30 mmol/kg et 70 mmol/kg de groupements terminaux hydroxyle et qu'avant la modification du PET recyclé en granulés de PET régénérés, on ajuste la teneur en eau du PET recyclé de manière à ce qu'elle soit comprise entre 100 ppm et 5000 ppm.

8. Utilisation selon la revendication 7, **caractérisée en ce que**, pour la fabrication de récipients d'un volume entre 250 ml et 1000 ml, on utilise des granulés de PET régénérés dont la viscosité intrinsèque, mesurée selon ASTM D 4603, est comprise entre 1,2 dl/g et 1,4 dl/g, et pour la fabrication de récipients d'un volume entre 750 ml et 5000 ml, les granulés de PET régénérés présentent une viscosité intrinsèque, mesurée selon ASTM D 4603, comprise entre 1,2 dl/g et 1,8 dl/g, et préférentiellement entre 1,3 dl/g et 1,6 dl/g.

9. Utilisation selon la revendication 8, **caractérisée en ce que**, suite à son usage, ledit récipient est susceptible d'être transformé en PET recyclé.

10. Procédé de fabrication de granulés de PET régénéré lesquels conviennent pour la fabrication de récipient par extrusion-soufflage et lesquels sont obtenus par condensation supplémentaire de granulés de PET recyclé obtenus par broyage en paillettes de bouteilles en PET usagées et/ou de déchets industriels issus de la fabrication de bouteilles en PET, pour ensuite faire fondre lesdites paillettes par extrusion au moyen d'une extrudeuse en réduisant en même temps la viscosité intrinsèque et en augmentant les groupements terminaux réactifs de type carboxyle et hydroxyle, faire passer sous pression la matière fondue à travers une filière pour obtenir un fil continu en fusion, refroidir le fil continu en fusion, et transformer le fil continu en fusion refroidi en granulés pour obtenir du PET recyclé, la teneur en eau dudit PET recyclé étant ajustée, avant la modification du PET recyclé en granulés de PET régénérés, de manière à ce qu'elle soit comprise entre 100 ppm et 5000 ppm, et le PET recyclé subissant une condensation supplémentaire par polycondensation en phase solide à une température comprise entre 185 °C et 230 °C sans ajout d'additifs de prolongation de chaîne et/ou de réticulation, faisant en sorte que les granulés de PET régénérés présentent une viscosité intrinsèque supérieure à 1,0 dl/g et, avec une préférence particulière, une viscosité comprise entre 1,1 dl/g et 1,7 dl/g, mesurée selon ASTM D 4603.

11. Procédé selon la revendication 10, **caractérisé en ce que** lesdites paillettes sont lavées.

12. Procédé selon l'une des revendications 10 ou 11, **caractérisé en ce que** le PET recyclé présente une viscosité intrinsèque inférieure à 0,8 dl/g.

13. Procédé selon l'une des revendications 10 à 12, **caractérisé en ce que** le PET recyclé est modifié dans un réacteur de polymérisation en phase solide à une température élevée comprise entre 185 °C et 230 °C, de préférence entre 195 °C et 220 °C et, avec une préférence particulière, entre 200 °C et 210 °C.

14. Procédé selon la revendication 13, **caractérisé en ce que** le PET recyclé est exposé à ladite température élevée pendant 6 h à 40 h, de préférence pendant 10 h à 35 h et, avec une préférence particulière, pendant 15 h à 30 h.

15. Procédé selon les revendications 13 ou 14, **caractérisé en ce que** le PET recyclé est exposé, au sein du réacteur de polymérisation en phase solide, à une pression négative inférieure à 50 mbar, de préférence inférieure à 10 mbar.

16. Procédé selon l'une des revendications 10 à 15, **caractérisé en ce qu'**avant la modification en granulés de PET régénérés, la teneur en eau du PET recyclé est ajustée de manière à ce qu'elle soit comprise entre 300 ppm et 3000 ppm.
